(19) Europäisches Patentamt
European Patent Office
Office européen des brevets

(11) **EP 4 504 671 B1**

(12) **EUROPEAN PATENT SPECIFICATION**

(45) Date of publication and mention
of the grant of the patent:
**24.12.2025 Bulletin 2025/52**

(21) Application number: **23734515.2**

(22) Date of filing: **19.06.2023**

(51) International Patent Classification (IPC):
**C03B 5/03** $^{(2006.01)}$   **C03B 5/04** $^{(2006.01)}$
**C03B 5/225** $^{(2006.01)}$   **C03B 5/235** $^{(2006.01)}$
**C03C 1/00** $^{(2006.01)}$

(52) Cooperative Patent Classification (CPC):
**C03B 5/03; C03B 5/04; C03B 5/225; C03B 5/235;**
Y02P 40/50

(86) International application number:
**PCT/EP2023/066382**

(87) International publication number:
**WO 2024/008419 (11.01.2024 Gazette 2024/02)**

(54) **ENERGY EFFICIENT AND DURABLE HYBRID GLASS MELTING FURNACE**

ENERGIESPARENDER UND DAUERHAFTER HYBRIDER GLASSCHMELZOFEN

FOUR DE FUSION DE VERRE HYBRIDE ÉCO-ÉNERGÉTIQUE ET DURABLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.07.2022 EP 22183449**

(43) Date of publication of application:
**12.02.2025 Bulletin 2025/07**

(73) Proprietor: **AGC Glass Europe
1348 Louvain-La-Neuve (BE)**

(72) Inventors:
• **BIOUL, François
6041 Gosselies (BE)**
• **BOURGEOIS, Nicolas
6041 Gosselies (BE)**
• **HABIBI, Zakaria
6041 Gosselies (BE)**
• **FASILOW, Fabrice
6041 Gosselies (BE)**

(74) Representative: **AGC Glass Europe
Technovation Centre
Intellectual Property Department
Rue Louis Blériot 12
6041 Gosselies (BE)**

(56) References cited:
**WO-A1-2020/229559**   **CN-A- 114 409 227**
**US-A1- 2016 311 715**

**Description**

## FIELD OF THE INVENTION

The present invention relates to a glass melting furnace aimed at continuously supplying molten glass to glass forming installations such as float or rolling installations. In particular, the present invention relates to a glass melting furnace that provides a lot of advantages, especially in terms of energy consumption, $CO_2$ emissions, process flexibility and durability.

The invention is more particularly related, but not limited, to melting furnaces for flat glass involving large production capacities, i.e. up to 1000 tons/day or more, and power demand up to 60 MW.

## BACKGROUND OF THE INVENTION

In the state of the art, vitrifiable materials are melted in a glass melting furnace that commonly comprises :

- a tank covered by a crown, containing a glass melt when the furnace is in use;
- at least one inlet located upstream of the furnace, for charging it with the vitrifiable materials to be heated;
- heating means located in the tank, and
- at least one downstream outlet for the melted glass to reach a processing zone or a working end.

In such glass meting furnace, the glass is commonly melted by flames coming from a combustion generated by burners provided above the glass surface and that allow to heat the bath of molten glass/raw materials from the top. Glass melting furnaces with oxy-fuel or air-fuel combustion are well known. Fuel may be fossil fuel, natural gas, biogas or hydrogen.

The global warming and the requirement for $CO_2$ emissions reduction increases the pressure on glass manufacturers, as well as the energy prices and $CO_2$ taxes that could become soon a severe threat on competitiveness in the glass business.

Electrical melting could be part of a solution. Glass melting furnaces where the heating power is entirely supplied by electricity are indeed known and have been developed in that context, even if they are well proven only for small capacities, i.e. below 300 tons/day (upscaling above 600 tons/day remains to be developed).

By opposition to classical combustion furnace called "hot-top furnaces" (or "warm-top"), these furnaces are also called "cold-top furnaces" because the raw materials are distributed over the glass melting surface forming an insulating batch "blanket" causing the temperature to drop from ~1400°C in the glass melt to < 500°C (and possibly down to 50°C) at the blanket and above.

All-electric furnaces offer significant advantages. First, they have very low direct emissions of $CO_2$, thermal $NO_x$ or $SO_x$ emissions. Moreover, heat losses in all-electric furnaces are much lower as the melting energy is transferred essentially into the glass (e.g. thanks to electrodes allowing an electric current to pass through and heat the bath of molten glass from its bulk), which makes them energy-efficient furnaces, e.g. compared to hot-top combustion furnace where there is a significant heat loss occurring from the superstructure of the furnace and in the residual waste gases, even if heat recovery system is used.

Unfortunately, all-electric furnaces show also some disadvantages in comparison with combustion hot-top furnaces.

In particular, in such furnaces:

- the glass quality does not reach typical flat glass specifications, especially in term of small bubble density; and
- the very high temperature of the bottom, where the electrodes are located, (e.g. > 1400°C) causes a significant decrease of the furnace lifetime due to accelerated corrosion of the bottom refractories and the walls of the glass tank (typically from more than 15 years for conventional furnaces to less than 8 years and sometimes 2-7 years).

Moreover, surface melting rate of cold-top all-electrical furnace, namely the amount of glass molten from raw materials per unit time and per unit of furnace area (expressed in $T/d/m^2$), is a direct function of glass temperature. In order to reach an acceptable surface melting rate (around 2-3 $T/d/m^2$) for such furnaces, it is necessary to target a glass temperature above 1400°C, or even above 1450°C, thereby impacting further negatively furnace lifetime. For comparison, surface melting rate on a classical combustion furnace is typically around 5 $T/d/m^2$. Alternatively, targeting a lower surface melting rate, to avoid as much as possible impacting furnace lifetime, would imply to significantly increase the melting area and consequently, will have a great negative impact on the required investments and on occupied industrial space.

Finally, such cold-top furnaces show no flexibility in term of energy (electricity only).

It is also known to combine, in a "hybrid system", combustion heating means and electrical heating means. In such a configuration, which operates mainly "warm-top", the furnace comprises burners and electrodes to supply power.

Such hybrid furnaces have a great advantage in terms of energy flexibility, allowing to adapt the electrical input fraction to different parameters, operational or conjectural.

Moreover, compared to a cold-top furnace, for a same bottom temperature, a hot-top furnace allows to reach a surface melting rate which is higher (or, alternatively, a lower bottom temperature for a same surface melting rate).

Next to that, hybrid furnaces operating "hot-top" show some drawbacks. In particular, there is a significant heat loss occurring (i) at the crown and walls of the melting zone and (ii) in the hot waste/flue gases produced during melting, thereby decreasing energy efficiency of the furnace. Heat recovery systems can be considered in order to limit the heat lost with flue gases but it does not annihilate the issue and it requests specific investments.

Moreover, in such furnaces, the temperature of the crown/superstructure in the melting zone can, under some conditions, become very low (e.g. < 1000°C) leading to a significantly increased risk of alkaline condensation (e.g. NaOH) in said zone and consequently, refractory corrosion of the crown.

Next to that, in those furnaces, the electrical input fraction is generally limited to maximum 35% of the total energy input, due notably to the limitations described above for the all-electrical furnaces, namely bottom and crown corrosion phenomena.

Some hybrid furnaces have been described recently with specific designs in order to increase the electrical input fraction, e.g. up to 80% but, for most of them, they operates cold-top with the issues that it brings.

WO2020229559 A1 discloses a furnace for melting vitrifiable materials including a melting tank having an upstream zone having the height h, a downstream zone having the height H, implicitly with a transition therebetween, whereby h is less than 50% of H and the lenght of the upstream zone is at least 40% of the combined lengths of the upstream and the downstream zones. The opening for exhausting flue gases is in the upstream zone. The upstream zone is heated electrically, while the downstream zone and the fining zone following afterwards include burners. The electrical input fraction of the furnace is 41% (p 5, line 18).

Therefore, an evolution of the existing glass melting furnace design is required in order to solve the above-exposed problems and in order to propose a glass melting furnace that combines combustion burners and electrodes as heating means, which show an acceptable surface melting rate together with a high energy efficiency and a long lifetime, while keeping a high electrical input fraction.

## OBJECTIVE OF THE INVENTION

It is an objective of the present invention to overcome the disadvantages described above with respect to the state of the art and resolving the technical problem.

In particular, it is an objective of the present invention to provide a glass melting furnace combining combustion burners and electrodes as heating means, with an increased energy efficiency (or, in other words, a decreased specific energy consumption), in particular compared to a classical "hot-top" hybrid melting furnace.

It is a further objective of the present invention to provide a glass melting furnace combining combustion burners and electrodes as heating means, which show an acceptable surface melting rate (in particular, a surface melting rate above 2 or, better, above 3 $T/d/m^2$).

It is a further objective of the present invention to provide a glass melting furnace combining combustion burners and electrodes as heating means, with an increased lifetime compared to a classical hot-top hybrid melting furnace.

It is a further objective of the present invention to provide a glass melting furnace combining combustion burners and electrodes as heating means, with an increased energy efficiency, an acceptable surface melting rate and an increased lifetime, while keeping a high electrical input fraction (in particular, from 30% to 85%).

## DESCRIPTION OF THE INVENTION

The present invention relates to a furnace for melting vitrifiable materials, comprising :

    (i) a melting tank M comprising :

-   at least an upstream zone Z1 covered by crown C1 and equipped with electrical heating means;
-   a downstream zone Z2 covered by a crown C2 and equipped with combustion heating means;
-   a transition zone T between crown C1 and crown C2;

    (ii) a fining tank F covered by a crown C4 and equipped with combustion heating means;
    (iii) a neck N covered by a crown C3 and separating the melting tank M and the fining tank F;
    (iv) at least one inlet mean X located at the melting tank M, for charging it with vitrifiable materials to be heated;
    (v) at least one outlet mean O located downstream of fining tank F for the melted glass to flow to a working zone; and

(vi) at least an extraction mean of flue gas located at the at least one upstream zone Z1; characterized in that :

- the height H1 of the crown C1 is defined by : $H1 \leq 0.75*H2$; H2 being the height of the crown C2;
- the length L1 of the at least one upstream zone Z1 is defined by : $0.25*(L1+L2) \leq L1 \leq 0.8*(L1+L2)$; L2 being the length of the downstream zone Z2; and
- the length LT of said transition zone T is defined by : $LT \leq 0.2*(L1+L2)$.

Hence, the invention is based on a novel and inventive approach. In particular, the inventors have found that, with a combination of (i) separating an electrical melting tank and a combustion fining tank by a neck and (ii) segmenting the melting tank into two zones with different crown heights in a specific design (thereby providing a colder upstream zone and a warmer downstream zone, with a significant temperature difference), the global energy consumption of the furnace may be reduced significantly while keeping a high electrical input fraction (thereby decreasing $CO_2$ emission), keeping an acceptable surface melting rate and improving the mechanical stability and lifetime of the furnace.

The melting crowns in the invention, C1 and C2, have been designed specifically by the inventors in order to take both advantages of "cold-top" and "hot-top" zones and to create a gradient of temperature from upstream, with relatively low temperatures (below 1100°C), to downstream, with relatively high temperatures (above 1300°C).

The inventors have evidenced that the furnace of the invention brings a lot of advantages in favour of energy consumption/ $CO_2$ emissions, of surface melting rate and of mechanical stability/ lifetime of the furnace.

In particular, the furnace of the invention allows a full control of (i) the temperatures in each zones and (ii) the flue gas repartition/extraction between both zones of melting tank and between melting tank and fining tank, in order to optimize energy consumption and to avoid as much as possible alkali corrosion.

The furnace of the invention is moreover advantageous to generate at the same time a significant temperature difference between the upstream and the downstream parts of the melting tank and to avoid as much as possible the flue gas occurring from the fining tank to flow back towards the melting tank.

From energy efficiency point of view, the furnace of the invention is advantageous as it allows :

- to segment atmospheres and cut off heat radiation from the fining tank towards melting tank(s), in order to confine efficiently energy in the zone where high temperatures are needed (fining zone) ; and
- to extract flue gas from the upstream part/exit at the lowest possible temperature, in order to limit the useless heating of gases released from vitrifiable materials and in order to optionally maximize the heat transfer from combustion gases to vitrifiable materials and glass melt.

From surface melting rate point of view, it is advantageous as it allows to reach relatively high temperature (>1300°C) in the downstream part of the melting tank in order to improve vitrifiable materials melting kinetics.

From corrosion point of view, it is advantageous as it allows :

- to separate atmospheres between the melting and the fining tanks allows to limit/avoid reflux of flue gas from the fining zone which are rich in alkali due to high temperatures required for fining and which therefore are very corrosive; and
- to have a restriction of the global molten glass flow that will advantageously reduce the strength of glass convection in the melting tank and reduces the glass velocity, and thereby decreasing bottom refractory wear and corrosion.

Finally, the furnace of the invention with its specific segmentation between melting and fining tanks (through a neck) also allows to completely dissociate the dimensioning (lengths, widths and crown heights) and refractories nature of the melting and the fining tanks, and therefore to optimize each tank taking into account energy efficiency, glass quality, plant space constraints, and mechanical/structural/other constraints.

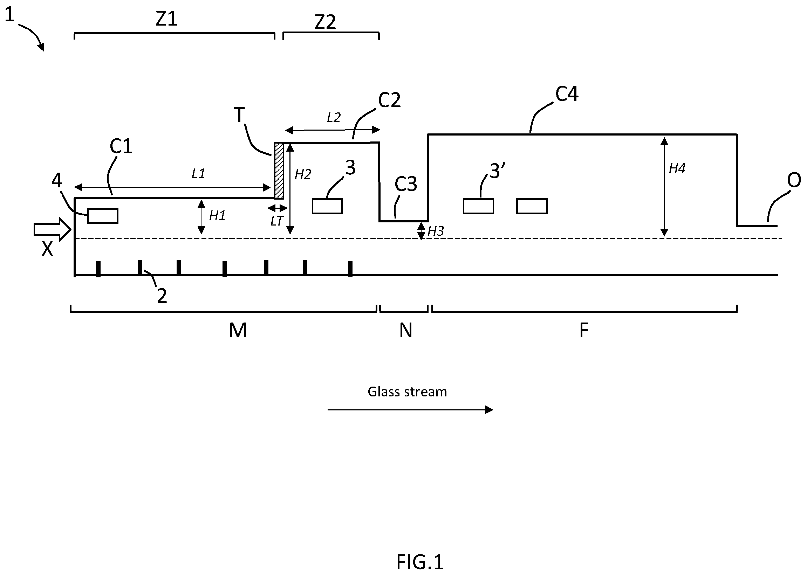

In present specification and claims, it is well understood by the person skilled in the art that, as used herein the terms "a", "an" or "the" means at least "one" and should not be limited to "only one" unless explicitly indicated to the contrary. Also, when a range is indicated, the extremities are included. In addition, all the integral and subdomain values in the numerical range are expressly included as if explicitly written. Finally, the terms "upstream" and "downstream" refer to the flow direction of the glass and are to be understood with their common sense, namely as meaning along the averaged moving direction of the vitrifiable materials/the glass melt (defined herein as "glass stream"), from the inlet mean(s) to the outlet mean(s), when operating the furnace according to the invention, that is to say along the direction going from the left to the right in FIGS. 1-2 for example.

According to the invention and as commonly adopted in the glass art, by "melting tank", it is meant a tank defining a zone where the vitrifiable materials are charged and melt by heating, and comprising, when the furnace is in process, a melt and a "blanket" of unmelted vitrifiable materials that floats on the melt and is progressively melted and therefore reduced from upstream to downstream of the melting tank.

According to the invention and as commonly adopted in the glass art, by "fining tank", it is meant a tank defining a zone where there is no more "blanket" of unmelted vitrifiable materials that floats on the melt and where the glass melt is heated at temperatures higher than melting tank temperatures (generally above 1400°C or even above 1450°C), in order to refine the glass (mainly by eliminating major part of bubbles). This fining tank is also commonly called "clarification tank" in the art.

The furnace of the invention is particularly suitable for producing flat glass sheets.

The present invention also relates to a process for melting vitrifiable materials to produce flat glass, comprising the steps of :

- providing a furnace according to the invention and its embodiments,
- charging the vitrifiable materials in said melting tank M with said inlet mean X,
- melting the vitrifiable materials in said melting tank M;
- fining the obtained melt in said fining tank F;
- flowing the melt from the fining tank F to a working zone trough the outlet mean O;

wherein the electrical input fraction of the furnace is in the range of from 30% to 85%, preferably from 35 to 85%.

According to the invention, the electrical input fraction in the process ranges from 30% to 85%. By "electrical input fraction" according to the invention, it is meant the part of electricity in the total energy input of the process/furnace for the melting/fining, namely electricity/(fuel+electricity), the total energy input being that of the process/furnace in standard/-normal production mode, i.e. at its standard pull range (excluding periods of start-up, maintenance, hot repair, culleting,...).

According to an embodiment, in the process of the invention, the vitrifiable materials comprise raw materials and cullet, the amount of cullet being at least 10% in weight of the total amount of vitrifiable materials, preferably at least 30% in weight of the total amount of vitrifiable materials.

Other features and advantages of the invention will be made clearer from reading the following description of preferred embodiments and figures, given by way of simple illustrative and non-restrictive examples.

FIG. 1 is a schematic plan view (vertical cross-section) of an embodiment of a furnace according to the invention.

FIG. 2 is a schematic plan view (horizontal cross-section) of the furnace embodiment of FIG. 1.

FIG. 3, 4 and 5 are schematic plan views (vertical cross-section) of embodiments of the transition zone according to the invention.

FIG. 6 is a schematic plan view (horizontal cross-section) of an embodiment of the invention.

FIG. 7 is a schematic plan view (horizontal cross-section) of an embodiment of the invention.

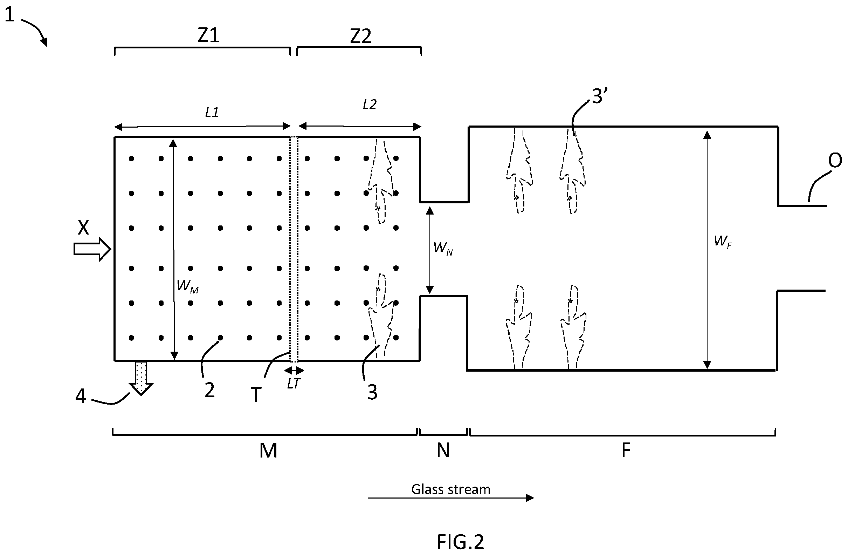

FIGS. 1 and 2 illustrate an embodiment of a furnace 1 of the invention (FIG.1: vertical cross-section, FIG.2: horizontal cross-section). The furnace 1 of FIGS. 1-2 comprises a melting tank M, a neck N and a fining tank F. The assemblies of M, N and F is commonly made from refractory materials resistant to temperatures, corrosion of the fumes and aggressive action of the molten materials. The illustrative glass melt level (excluding the batch blanket) in the tank is shown by a broken line in FIG.1.

According to the invention and as illustrated at FIGS. 1-2, the furnace 1 is supplied with vitrifiable materials (glass raw materials and/or cullet) at the melting tank M, thanks to at least one inlet mean X.

To improve distribution over the surface of the melting tank M, several inlet means located upstream of the melting tank M (in particular, in the zone Z1) may be advantageously provided, i.e. two or three inlet means.

Preferably, and as known in the art, the at least one inlet mean X is located upstream of the melting tank (in particular, in the zone Z1), in the width of said tank and/or laterally in its length.

According to the invention and as illustrated at FIGS. 1-2, the furnace comprises a melting tank M comprising:

- at least an upstream zone Z1 covered by a crown C1 and equipped with electrical heating means 2;
- a downstream zone Z2 covered by a crown C2 and equipped with combustion heating means 3;
- a transition zone T between crown C1 and crown C2.

According to another advantageous embodiment, the downstream zone Z2 is equipped further with electrical heating means, as illustrated in FIGS. 1 and 2.

Electrical heating means 2 according to the invention are preferably located at the bottom of the melting tank M and preferably, also, composed of immersed electrodes. The electrodes are advantageously arranged in grid pattern (checkerboard) multiple of 3 or 2, in order to facilitate connection to transformers and electric current balance. For example, the number of electrodes is designed in order to limit maximum power for each electrode to 200kW, by respecting a maximum current density of $1.5A/cm^2$ at the electrode surface. For example also, immersed electrodes height is between 0.3 and 0.8 times glass melt height.

Combustion heating means 3 in the downstream zone Z2 in the melting tank M are especially composed of burners. In particular, they may be commonly arranged in rows and be arranged along side walls of said zone, e.g. on one side or alternatively on each side thereof to spread the flames over practically the entire width of said zone. They may also be, alternatively or additionally, located in the crown C2, which promotes heat transfer to batch and is then advantageous to reduce the batch length and avoid that the batch blanket reaches the end of the downstream zone Z2 and thereby the downstream end of the melting tank.

The burners may be supplied with fuel and air, or fuel and oxygen, or fuel and a gas that is enriched in oxygen. Fuel may be fossil fuel, natural gas, biogas, hydrogen, ammonia, synthetic gas or mixture thereof.

According to an advantageous embodiment, the at least one upstream zone Z1 may be equipped with auxiliary combustion heating means (e.g. burners, not illustrated in FIGS.), in order to allow a control of the temperature of the crown C1 (e.g. to limit temperature variation along zone Z1) and raise the temperature if it drops below a certain level (e.g. below 600°C). In particular, these auxiliary combustion heating means may be advantageously located in the crown C1, to reduce occupation of space in the free volume above the melt/batch blanket.

The upstream zone Z1 according to the invention is covered by a crown C1. The downstream zone Z2 according to the invention is covered by a crown C2.

According to the invention, the height H1 of the crown C1 is defined by : $H1 \leq 0.75*H2$; H2 being the height of the crown C2. In the invention, the change in height between the crowns C1 and C2 along the melting tank M implies a transition zone T.

By "height" for a crown in the invention, it is meant, herein and in the whole specification and claims, the average inner height (as illustrated in FIG.1), from the inner surface of said crown to the glass melt (excluding batch blanket if present). The height H1 of the crown C1 may be substantially constant along the length of said crown, or alternatively, it may vary in the length of said crown. The height H1 of the crown C1 may be substantially constant along the width of said crown, or alternatively, it may vary in the width of said crown (e.g. in case of an arched/vaulted crown). The height H2 of the crown C2 may be substantially constant along the length of said crown, or alternatively, it may vary in the length of said crown. The height H2 of the crown C2 may be substantially constant along the width of said crown, or alternatively, it may vary in the width of said crown (e.g. in case of an arched/vaulted crown).

According to an embodiment of the invention, the height H1 of the crown C1 is defined by : $H1 \leq 0.7*H2$, preferably, $H1 \leq 0.6*H2$ and even, $H1 \leq 0.5*H2$. This allows to enhance the above-described advantages of the invention.

According to the invention, the length L1 of the at least one upstream zone Z1 is defined by : $0.25*(L1+L2) \leq L1 \leq 0.8*(L1+L2)$; L2 being the length of the downstream zone Z2.

By "length", it is meant, herein and in the whole specification and claims, the dimension taken along the glass stream.

According to another embodiment of the invention, the length L1 of the at least one upstream zone Z1 is defined by : $0.3*(L1+L2) \leq L1$, preferably, $0.4*(L1+L2) \leq L1$ and even $0.5*(L1+L2) \leq L1$. This allows also to enhance the above-described advantages of the invention.

According to another embodiment of the invention, the length L1 of the at least one upstream zone Z1 is defined by : $L1 \leq 0.75*(L1+L2)$, preferably $L1 \leq 0.7*(L1+L2)$.

It is worth to mention that the total length of the melting tank may be a bit higher (e.g. in the order of 10%-15%) than the sum (L1 + L2). Indeed, it is common in the art to provide the extreme upstream part of the melting tank with a first zone Z0 (generally called "doghouse") for the introduction of the vitrifiable materials and their push in the direction of the melt (not illustrated in FIGS.).

The crown C1 according to the invention may be arched or vaulted, or alternatively, it may be flat. Independently of the crown C1, the crown C2 according to the invention may be arched or vaulted, or alternatively, it may be flat.

Advantageously, the crown C1 may be composed of refractories made essentially of silica (e.g. high-purity silica). Silica refractories are known to be more sensible to corrosion (compared to alumina for example) but, thanks to the existence of the neck separating the melting and the fining tanks in the invention, there is less alkali in the fumes present in the melting tanks.

The advantage of silica is its low dilatation coefficient if temperature is above about 600°C, that allows to stand high variations in temperature without disturbing the crown superstructure.

Alternatively, the crown C1 and/or the crown C2 may be composed of refractories made essentially of alumina or AZS (alumina-zirconia-silica), which have a better resistance to corrosion and therefore a better lifetime.

According to the invention and as illustrated at FIG. 2, the furnace comprises a melting tank M comprising at least one upstream zone Z1 and a downstream zone Z2 with different crown heights, C1 with a height H1 and C2 with a height H2.

In the invention, the change in height between the crowns C1 and C2 along the melting tank M implies a transition zone T.

According to the invention, the length LT of the transition zone T is defined by : $LT \leq 0.2*(L1+L2)$, preferably $LT \leq 0.15*(L1+L2)$, or even $LT \leq 0.1*(L1+L2)$. For the sake of clarity, it is clear from the concept of the invention that said transition zone T is present/mandatory in the furnace of the invention, meaning that LT must not have a length with a zero value or meaning, in other words, that the value LT = 0 is implicitly excluded from the scope of the invention.

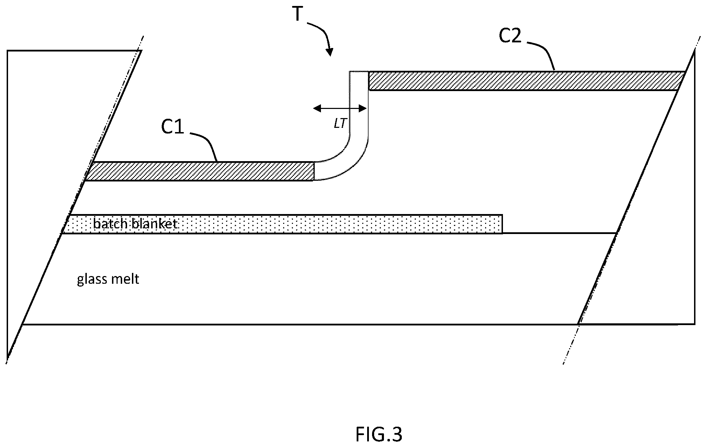

FIG. 3, 4 and 5 are schematic view of embodiments of the transition zone between Z1 and Z2 according to the invention. On those figures, the glass melt is illustrated, as well as the batch blanket for illustrative purpose only. Heating means are not represented.

According to an embodiment, the transition zone T between crown C1 and crown C2 may be a gable wall. The gable wall according to an embodiment may be a vertical wall (as illustrated in FIG.3) or a short inclined wall (allowing a progressive transition). In this embodiment, the crown C1 has preferably an inner surface which is at essentially the same level as, or slightly lower than, the lower edge of the gable wall. The gable wall can be composed of a suspended backwall. A suspended backwall in accordance with the invention may be for example one as described in patent application US5011402A. Alternatively, the gable wall may lay down on the outer surface of crown C1.

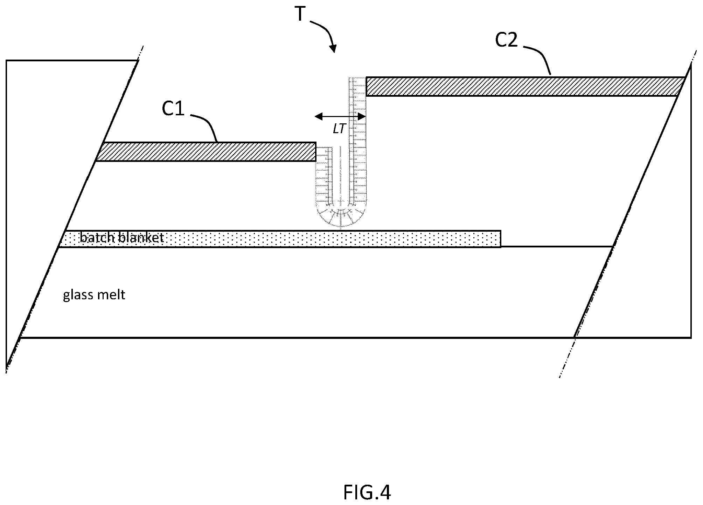

According to another embodiment, the transition zone T between crown C1 and crown C2 is a shadow wall. By "shadow wall" in the invention, it is meant a wall that has a lower edge extending below the inner surface of the crown C1, and thereby closer to the glass melt, but that leaves a free space above said glass melt. This embodiment has the advantage of further reducing the radiation heat exchange between the upstream and downstream zones of the melting tank, and of better separating the flue gas released from Z1 and Z2, while allowing the vitrifiable materials pushed from upstream to pass through the free space left. For example, this shadow wall may be a air-cooled suspended wall, as known in the art. An example of configuration of a shadow wall is illustrated in FIG.4. A shadow wall according to the invention may be composed of a suspended U-shaped shadow wall, as for example as described in patent application US3399046A.

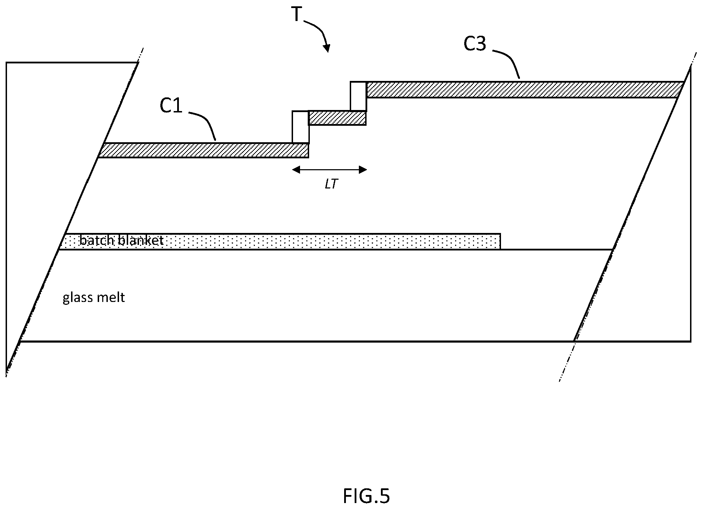

According to further embodiment, the transition zone T between crown C1 and crown C2 comprises at least one step. In a configuration with one step, illustrated in FIG. 5, the change in height of the crowns C1 and C2 is obtained for example by a transition zone T comprising, from C1 to C2: a first gable wall, a short crown at a height intermediate between H1 and H2 and a second gable wall. This configuration has the advantage to facilitate the manufacturing and increase the stability of the transition between crown C1 and crown C2.

By "length of the transition zone", it is meant, herein and in the whole specification and claims, the dimension of said zone taken along the glass stream and including thickness of wall(s) (even if laying down and/or overlapping crown C1 and/or crown C1).

According to an advantageous embodiment, the transition zone is composed of refractories made essentially of silica.

Advantageously, according to another embodiment, the crown C1 and transition zone T are made of the same refractory material, in order to avoid dilatation between materials and/or to avoid inter-material corrosion. Preferably, there are composed of refractories made essentially of silica.

Advantageously also, according to another embodiment, the crown C1, the crown C2 and transition zone T are made of the same refractory material, in order to avoid dilatation between materials and/or to avoid inter-material corrosion. Preferably, there are composed of refractories made essentially of silica.

According to the invention and as illustrated at FIGS. 1-2, the furnace comprises a fining tank F covered by a crown C4 and equipped with combustion heating means 3'.

The crown C4 according to the invention is preferably arched or vaulted.

Combustion heating means 3' from the fining tank F according to the invention are especially composed of burners , in particular arranged along the side walls of said tank. Moreover, the burners are advantageously spaced from one another in order to distribute the energy supply over a portion, preferably the upstream part (for example, on ~50% of the length) of the fining tank F. They are also commonly arranged in rows on one side or, alternatively, on each side of the fining tank F and preferably in a staggered arrangement (to spread the flames over practically the entire width of said tank). The burners may be supplied with fuel and air, or fuel and oxygen, or fuel and a gas that is enriched in oxygen. Fuel may be fossil fuel, natural gas, biogas, hydrogen, ammonia, synthetic gas or mixture thereof.

According to an advantageous embodiment, the fining tank may further comprise electrical heating means (not illustrated in FIGS.), in particular in the upstream part of said fining tank (for example, on ~50% of its length). This allows to increase the electrical input fraction and to increase consequently the energy efficiency, and thereby decrease $CO_2$ emission.

According to the invention and as illustrated at FIGS. 1-2, the furnace comprises a neck N covered by a crown C3 and separating/segmenting the melting tank M and the fining tank F.

According to the invention, by a "neck" separating the melting tank M and the fining tank F, it is meant a narrowing in width and in (crown) height compared to the downstream zone of the melting tank (zone Z2) and compared to the upstream zone of the fining tank F. The opening of the neck according to the invention is only partially under the glass melt/batch blanket free surface, then leaving a free opening above the glass melt/batch blanket.

According to the definition of a neck according to the invention, the width $W_N$ of the neck N is as follows : $W_N < W_M$, $W_M$ being the width of the melting tank M. Also according to the definition of a neck according to the invention, the width $W_N$ of the neck N is as follows : $W_N < W_F$, $W_F$ being the width of the fining tank F.

By "width" in the invention, it is meant, herein and in the whole specification and claims, the dimension (in average) perpendicular to the glass stream.

This furnace design, with a segmentation of the melting and fining tanks, brings a lot of advantages in favour of energy consumption/$CO_2$ emissions and in favour of mechanical stability/ lifetime of the furnace. In particular, advantageously in the context of present invention, this furnace with its specific segmented design allows to deal with flue gas from melting tank(s) and flue gas from fining tank independently, if desired.

The base of the neck N in the invention may be located essentially at the level of the floor/bottom of the melting tank M, or above said level or below said level. Moreover, the base of the neck N may be located essentially at the level of the floor/bottom of the fining tank F, or above said level or below said level.

According to an embodiment, the neck N does not comprise any heating means, e.g. any electrical heating means.

The crown C3 according to the invention may be arched or vaulted, or alternatively, it may be flat. According to the definition of a neck according to the invention, the crown C3 of the neck N has a height H3 which is lower than the height H2 of the crown C2 of the melting tank M. Also according to the definition of a neck according to the invention, the crown C3 of the neck N has a height H3 which is lower than the height H4 of the crown of the fining tank F.

According to still another advantageous embodiment of the invention, the furnace may comprise a removable wall located at the neck (e.g. a skimbar coming from the side wall of the neck), in order to (i) possibly stop unmelted vitrifiable materials that could arrive at the end of the melting tank and thereby avoid their passing through the neck towards the fining tank and (ii) control the intensity of or annihilate the backward flow of the glass melt from the fining towards the melting tank.

According to still another advantageous embodiment of the invention, the furnace may comprise a removable wall located at the neck (e.g. a shadow wall passing through the crown of the neck) in order to increase segmentation of melting and fining tanks in terms of atmosphere and heat radiations.

According to the invention and as illustrated at FIGS. 1-2, the furnace comprises at least one outlet mean O located downstream of the fining tank F for the melted glass to reach a working zone. According to an embodiment, the outlet mean O is composed usually of a neck, in order to lead the melt towards a working zone commonly called "working end" or also "braise" or also "conditioning zone". Alternatively, the outlet mean O is composed of a throat (namely an opening completely immerged in the glass melt, leaving no free surface above it), in order to lead the melt towards a working zone including, for example, forehearth(s). The working zone according to the invention may comprise, for example, a conditioning zone in which thermal conditioning by controlled cooling is carried out prior to glass melt leaving said zone through an outlet to a forming zone. Such a forming zone may comprise, for example, a float installation and/or a rolling installation.

According to an advantageous embodiment of the invention, the furnace is defined by the following:

$$0.1*W_F \leq W_N \leq 0.7* W_F;$$

$$W_M \geq 1.4*W_N;$$

$W_M$ being the width of melting tank M;
$W_F$ being the width of fining tank F;
$W_N$ being the width of neck N.

This embodiment allows to enhance the above-described advantages of the invention, and in particular:

- to better separate atmospheres between the melting and the fining tanks, thereby limiting reflux of corrosive fumes from the fining tank to the melting tank;
- to enhance the cut off of heat radiation from the fining tank towards the melting tank;
- to enhance restriction of the global molten glass flow or even to annihilate the backward flow.

Preferably also, the furnace is defined by $0.1*W_F \leq W_N \leq 0.6*W_F$. More preferably, the furnace is defined by $0.2*W_F \leq W_N \leq 0.6*W_F$, or even by $0.3*W_F \leq W_N \leq 0.5*W_F$. This allows to find a good compromise between two opposite requirements : from one side, the neck(s) between the melting zone and the fining zone should be ideally as narrow as possible in order to (1) decrease the opening between melting and fining superstructures/crowns and (2) generate an obstacle to global glass melt convection strength in the melting tank, and, from the other side, the neck should be ideally as wide as possible in order to limit glass velocity inside the neck, to limit neck refractory wall wear/corrosion.

Preferably also, the furnace of the invention is defined by $W_M \geq 1.5*W_N$, or even $W_M \geq 1.8*W_N$. More preferably, the furnace of the invention is defined by $W_M \geq 2*W_N$. This allows to reach a higher width restriction at the neck N and to improve the cut off of heat radiation, to allow better atmosphere separation and to generate a restriction of the molten glass flow.

According to the invention and as illustrated in FIGS.1 and 2, the furnace comprises at least an extraction mean 4 of flue gas located at the at least one upstream zone Z1, preferably close to inlet mean(s) X, in order to recover and transfer heat from flue gas to the glass melt and/or unmelted vitrifiable materials in the melting tank M.

According to an embodiment of the invention, the furnace comprises further at least an extraction mean of flue gas in the downstream zone Z2 and/or at least an extraction mean of flue gas in the fining tank F (not illustrated in FIGS).

When an extraction mean is present in the zone Z2, this allows advantageously to extract flue gas from downstream zone Z2 if this gas is rich in alkali (and thereby avoid condensation and subsequent corrosion in the zone Z1).

When an extraction mean is present in the fining tank F, it is preferably located in the upstream part of fining tank.

Preferably, in the invention, the extraction mean(s) 4 is/are located on side walls, on one side or both sides.

In particular, it is advantageous energetically in the invention that the flue gas is extracted at maximum from the upstream of the furnace, and in particular from the upstream of the melting tank. For example, at least 25% of flue gas generated in the melting zone may be advantageously extracted from the upstream of the melting tank. Nevertheless, extracting a part of the flue gas from downstream in the melting tank could be advantageous in order to limit risks related to alkali attack of crown refractory materials. Indeed, alkali evaporation increases with temperature, and alkali concentration in flue gas will then be higher in the downstream part of the melting zone. Flue gas with higher alkali concentrations could generate problems related to condensation in colder areas of the superstructure/crown, so that it would be better to discharge them from downstream. Moreover, extracting a part of the flue gas from upstream in the melting tank could be advantageous because in that upstream zone, the flue gas are essentially made of gas release from raw materials decomposition and therefore poor in alkali. Finally, extracting a part of the flue gas from the fining tank could also be advantageous, as flue gas in the fining tank are even more charged with alkali due to higher temperatures required for fining.

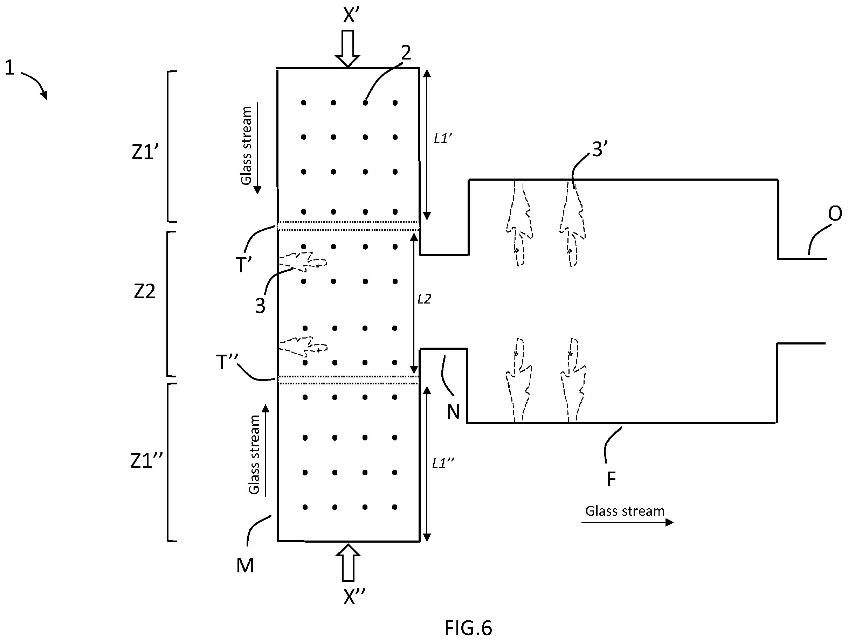

In an advantageous embodiment of the invention, illustrated at FIG.6, the furnace for melting vitrifiable materials comprises a melting tank M enlarged laterally and equipped with inlet mean(s) X' and X" located at each lateral side, so that the melting tank comprises two different upstream zones Z1' and Z1", and two transition zones T' and T", with two opposed glass streams converging through a central downstream zone Z2.

In this configuration:

- the height H1' of the melting crown C1' is defined by : $H1' \leq 0.75*H2$;
- the height H1" of the melting crown C1" is defined by : $H1" \leq 0.75*H2$;
- the length L1' of the at least one upstream zone Z1' is defined by : $0.25*(L1'+L2) \leq L1' \leq 0.8*(L1'+L2)$;
- the length L1" of the at least one upstream zone Z1" is defined by : $0.25*(L1"+L2) \leq L1" \leq 0.8*(L1"+L2)$;
- the length LT' of transition zone T' is defined by : $LT' \leq 0.2*(L1'+L2)$; and
- the length LT" of transition zone T" is defined by : $LT" \leq 0.2*(L1"+L2)$.

In this configuration also:

- the melting tank comprises one downstream crown C2 and two upstream crowns C1' and C1". Crowns C1' and C1" may be each configured independently according to any embodiment of the invention related to the crown C1. For example, the upstream crowns C1' and C1" may have the same or different height H1' and H1";
- the melting tank comprises two transition zones T' and T". They may be each configured independently according to any embodiment of the invention related to the transition zone T.

In this configuration also, for example, the combustion heating means 3 are located as illustrated at Fig.6, in the melting tank wall facing the neck, for example two burners. Alternatively, for example, the burners 3 are located in the crown C2.

In this advantageous configuration/embodiment, each upstream zone, each upstream crown and each inlet mean is according to the invention and its embodiments and may be designed independently of the other upstream zone, upstream crown and inlet mean respectively, according to the description above. Hence, for sake of clarity, features described above in relation with Z1 are applicable to Z1' and Z1" independently, features described above in relation with C1 are applicable to C1' and C1" independently, features described above in relation with T are applicable to T' and T" independently, and features described above in relation with X are applicable to X' and X" independently. Moreover, specific advantageous features described in relation with M, C2, C3, C4, N, F, etc. are applicable also to this specific configuration, with the same advantages.

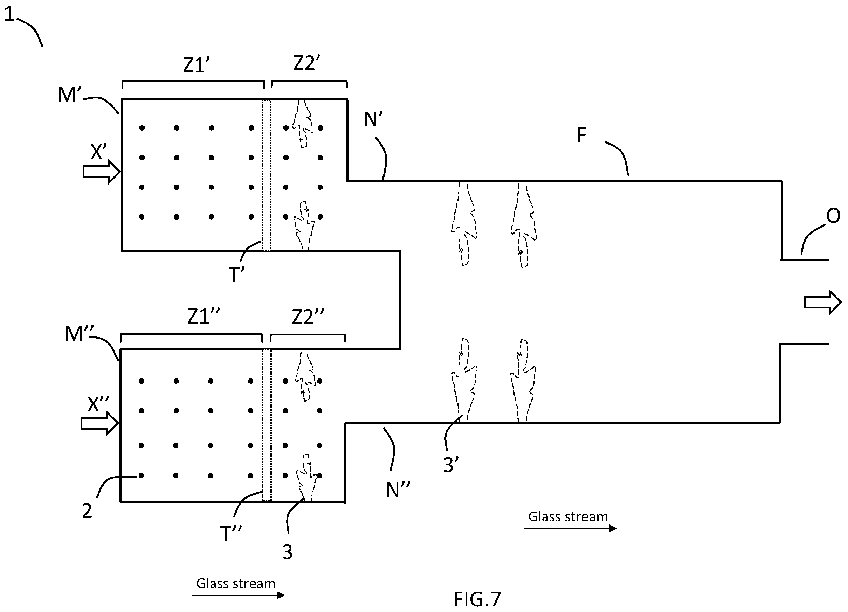

In an embodiment of the invention, illustrated at FIG.7, the furnace for melting vitrifiable materials comprises two melting tank M' and M", two necks N' and N" (one for each melting tank) and at least two inlet means X' and X" (one for each melting tank).

This configuration is particularly advantageous compared to the configuration with one melting tank (FIG.2) as it allows:

- to reduce the crown span of each melting tank for a same global melting tank area and furnace length (the length is generally more a constraint than the width). The reduction of crown span allows

  (i) to reduce stress inside the crown materials, and then reduce risk regarding material creep and crown sagging. It will then make possible the use of refractory materials that are more resistant to corrosion and less resistant to creep, such as alumina or spinel, and thereby increase furnace lifetime;
  (ii) to reduce crown average height in case of arched shaped crown C1 and/or C2, leading to lower horizontal radiation transfer, and subsequently to better heat transfer from flue gas to the glass melt in case flue gas is extracted from melting tanks;

- for a same total neck width ($W_{N'} + W_{N''}$) and in case of arched shaped neck crown C3, to reduce the opening surface between the melting and fining tanks;
- for a same total neck width ($W_{N'} + W_{N''}$), to reduce the strength of glass convection in the melting tank;
- to render easier furnace maintenance in the melting zone. Indeed, with 2 melting tanks, it is possible to isolate one melting tank from the rest of the furnace and cooling it down, while pursuing production with the other melting tank. It is then possible to increase the total furnace lifetime, by replacing worn refractory materials in the melting areas which is the most critical area regarding wear/corrosion.

In this configuration, the furnace has two melting tanks M', M", each melting tank having its upstream zone, Z1' or Z1", its upstream crown, C1' or C1", its downstream zone, Z2' or Z2", its transition zone, T' or T", and its inlet mean, X' or X". Moreover, each melting tank M' and M" is separated from the fining tank F by a neck, N' and N" respectively.

In this configuration:

- the height H1' of the melting crown C1' is defined by : $H1' \leq 0.75 \cdot H2'$;
- the height H1" of the melting crown C1" is defined by : $H1" \leq 0.75 \cdot H2"$;
- the length L1' of the upstream zone Z1' is defined by : $0.25 \cdot (L1'+L2') \leq L1' \leq 0.8 \cdot (L1'+L2')$; and
- the length L1" of the at least one upstream zone Z1" is defined by : $0.25 \cdot (L1"+L2") \leq L1" \leq 0.8 \cdot (L1"+L2")$;
- the length LT' of transition zone T' is defined by : $LT' \leq 0.2 \cdot (L1'+L2')$; and
- the length LT" of transition zone T" is defined by : $LT" \leq 0.2 \cdot (L1"+L2")$.

In this configuration also:

- the upstream and downstream zones may be each configured independently according to any embodiment of the invention related to Z1 and Z2.
- the crowns C1' and C1" may be each configured independently according to any embodiment of the invention related to the crown C1. For example, the upstream crowns C1' and C1" may have the same or different height H1' and H1";
- the crowns C2' and C2" may be each configured independently according to any embodiment of the invention related to the crown C2. For example, the crowns C2' and C2" may have the same or different height H2' and H2"; and
- the transition zones T' and T" may be each configured independently according to any embodiment of the invention related to the transition zone T.

In this advantageous configuration/embodiment, each melting tank, each upstream zone, each downstream zone, each transition zone, each neck and each inlet mean is according to the invention and its embodiments and may be designed independently of the other melting tank, upstream zone, downstream zone, transition zone, neck and inlet mean respectively, according to the description above. Hence, for sake of clarity, features described above in relation with M are applicable to M' and M" independently, features described above in relation with Z1 are applicable to Z1' and Z1" independently, features described above in relation with C1 are applicable to C1' and C1" independently, features described above in relation with Z2 are applicable to Z2' and Z2" independently, features described above in relation with C2 are applicable to C2' and C2" independently, features described above in relation with T are applicable to T' and T" independently, and features described above in relation with X are applicable to X' and X" independently.

Moreover, specific advantageous features described in relation with the furnace with one melting tank (e.g. those described in relation with C3, C4, F) are applicable to this "two melting tanks" configuration, with the same advantages.

In the "two melting tanks" furnace according to an embodiment, the two melting tanks M' and M" are preferably connected to the fining tank F by two necks N', N" located in the width $W_F$ of said fining tank F (as illustrated in FIG.7). Alternatively, in the "two melting tanks" configuration, one melting tank is connected to the fining tank by a neck located in the width $W_F$ of the fining tank and the second melting tank is connected to the fining tank by a neck located in the length of the fining tank (right or left side) and close to upstream of the fining tank (i.e. in the first third of its length). This last configuration may be advantageous, for example, when the space existing in the plant housing the furnace is not sufficient to place two melting tanks side by side.

In the "two melting tanks" configuration, in the case where the two melting tanks are connected to the fining tank by the necks located in the width $W_F$ of said fining tank, the distance D between the two melting tanks is preferably at least 1m, and more preferably, at least 2m, or better at least 3m. This is advantageous as it allows access to the zone for maintenance operations and tank wall overcoating.

In an alternative embodiment of the invention, the furnace for melting vitrifiable materials is in a configuration with three melting tanks; three necks and three inlet means. This embodiment is particularly advantageous compared to the configuration with one melting tank in the same way as for the "two melting tanks" configuration. In this "three melting tanks" configuration, each neck, each melting tank and each inlet mean is according to the invention and its embodiments, and may be designed independently of the other necks, melting tanks and inlet means respectively, according to the description above.

Specific advantageous features described in relation with the furnace with "one melting tank" and with "two melting tanks" configurations are applicable to the "three melting tanks" configuration, with the same advantages.

In the "three melting tanks" furnace according to an embodiment, in the case where at least two melting tanks are connected to the fining tank by necks located in the width $W_F$ of said fining tank, the distance D between two adjacent melting tanks is preferably at least 1m and more preferably, at least 2m, or better at least 3m.

In all furnace configurations according to the invention, namely "one melting tank", "two melting tanks" and "three melting tanks" configurations, to facilitate distribution of the vitrifiable materials to charge, more than one inlet mean may be provided for each melting tank, i.e. two inlet means by melting tank.

In all furnace configurations according to the invention, preferably, the total surface area of the melting tank(s) ranges from 25 to 400 m². Preferably also, according to the invention, the surface area of the fining tank ranges from 25 to 400 m².

The following examples are provided for illustrative purposes, and are not intended to limit the scope of this invention.

## EXAMPLES

An example of a furnace according to the invention and comparative examples of furnaces from the state-of-the-art were computed in a known manner.

The optimization and design of melting furnaces is difficult, risky and very slow without mathematical modelling. Indeed, furnaces are very expensive and their lifetime is more than 15 years, even up to 20 years. There are then only few occasions to perform study and design modifications, and there is a high pressure to reduce the risk related to these modifications. Therefore, mathematic modelling of the melting process in operated glass furnaces has been developed thoroughly in the glass art and is well known amongst glass manufacturers. Use of mathematical models provides detailed temperature and velocity fields of the glass melt in the tank(s), and of the gases in the combustion/fining space(s). The results of these existing mathematical modelling have been validated on many operating furnaces, by comparison with measurements (thermocouples and infrared cameras).

The following furnaces with same glass pull (90 T/d) and same furnace area were considered for the present computations, with by default (without other explicit mention) :

- a melting tank of 7m width ($W_M$) and 7m total length,
- a fining tank F of 6m width ($W_F$) and 8m length,
- a glass outlet mean downstream of the fining tank,
- an average crown height H4 of the fining tank equal to 3.5m.

- Furnace 1 (comparative) : "cold-top" glass melting furnace with a neck between melting and fining tanks, equipped with:

- a cold-top melting tank with a suspended flat crown;
- vertical charging of vitrifiable materials in the melting tank;
- a neck of 2.4m width ($W_N$) and 3.0m length separating the melting and the fining tanks,
- electrodes in the melting tank;
- oxy-burners fed with pure oxygen and natural gas in the fining tank;
- an opening to extract flue gas located in the melting tank;
- an opening to extract flue gas located in the upstream part of the fining tank.

- Furnace 2 (comparative) : conventional "hot-top" glass melting furnace with a neck between melting and fining tanks, equipped with:

- a hot-top melting tank with a standard arched crown, with averaged height equal to 1.7m;
- horizontal charging of raw materials in the melting tank from upstream;
- a neck of 2.4m width ($W_N$) and 3.0m length separating the melting and the fining tanks,
- electrodes in the melting tank;
- oxy-burners fed with pure oxygen and natural gas in the melting tank;
- oxy-burners fed with pure oxygen and natural gas in the fining tank;
- two openings to extract flue gas located in the melting tank, one from upstream and one from downstream;
- an opening to extract flue gas located in the upstream part of the fining tank.

- Furnace 3 : furnace according to the invention, equipped with :

- a melting tank with two zones Z1 and Z2 covered by arched crowns C1 and C2, respectively, and with :

  - averaged height of C1, H1 being equal to 0.8m and averaged height of C2, H2 being equal to 2.3m; and
  - length L1 being equal to 3.8m and length L2 being equal to 2.0m;
  - a transition zone between crowns C1 and C2 being a gable wall laying down on the outer surface of crown C1 and having a length LT equal to 0.5m.

- horizontal charging of raw materials in the melting tank from upstream (in zone Z1);
- a neck of 2.4m width ($W_N$) and 3.0m length separating the melting and the fining tanks,
- electrodes in the melting tank (in zone Z1 and zone Z2);
- oxy-burners fed with pure oxygen and natural gas in the zone Z2;
- oxy-burners fed with pure oxygen and natural gas in the fining tank (two opposed and staggered burners at approx. 50% of its length);
- two openings to extract flue gas located in the melting tank, one from upstream (in zone Z1) and one from downstream (in zone Z2);
- an opening to extract flue gas located in the upstream part of the fining tank.

- Furnace 4 (comparative) : furnace with a segmentation in height of the melting crown and with no neck between melting and fining tanks, equipped with :
- a melting tank with two zones Z1 and Z2 covered by arched crowns C1 and C2, respectively, with same design as Furnace 3;
- horizontal charging of raw materials in the melting tank from upstream;
- electrodes in the melting tank; (in zone Z1 and zone Z2, same disposition as in Furnace 3)
- oxy-burners fed with pure oxygen and natural gas in in the zone Z2 (same disposition as in Furnace 3);
- oxy-burners fed with pure oxygen and natural gas in the fining tank(same disposition as in Furnace 3);
- two openings to extract flue gas located in the melting tank, one from upstream and one from downstream;
- an opening to extract flue gas located in the upstream part of the fining tank.

| | Furnace 1 | Furnace 2 | | | Furnace 3 (INV) | | | Furnace 4 |
|---|---|---|---|---|---|---|---|---|
| Electrical input fraction [%] | 60.1% | 0.0% | 30.6% | 36.4% | 10.3% | 36.4% | 44.6% | 36.4% |
| **Specific Consumption** [GJ/T, %] | 5.38 | 7.34 | 6.59 | 6.53 | 7.00 | 5.80 | 5.71 | 5.60 |
| | 100% | 136% | 122% | 121% | 130% | 107% | 106% | 104% |
| Melter electrical power [MW] | 3.4 | 0.0 | 2.1 | 2.5 | 0.8 | 2.2 | 2.7 | 2.1 |
| Melter combustion power [MW] | 0.0 | 4.6 | 2.3 | 2.1 | 3.4 | 1.4 | 1.1 | 1.3 |
| Fining combustion power [MW] | 2.2 | 3.0 | 2.5 | 2.2 | 3.1 | 2.5 | 2.2 | 2.4 |
| Max T° crown melting [°C] | <500 | 1560 | 1350 | 1305 | 1560 | 1320 | 1320 | 1550 |
| Max T° bottom melting [°C] | 1410 | 1120 | 1350 | 1390 | 1120 | 1350 | 1400 | 1415 |

Results obtained are given in the table below for furnaces 1-4.
Those results show that the segmentation in height of the superstructure/crown of the melting tank, combined with a neck separating the melting tank and the fining tank, leads to better energy efficiency for same electrical input fraction. For instance, comparing Furnace 3 with Furnace 2 for an electrical input fraction around 36%, specific consumption of the segmented furnace is 13% lower.

On the other hand, for same electrical input fraction, melting bottom temperatures are significantly lower with the furnace of the invention. For instance, with an electrical input fraction around 36%, maximum bottom temperature is 1350°C in the furnace 3 according to the invention while it is 1390°C with a standard hot-top superstructure and a neck (Furnace 2) and 1415°C with a segmentation in height of the melting crown but no neck (Furnace 4).

It is to be noted that, in the case of Furnace 1 with only electrical power in the melting zone, the electrical input and the glass temperature are directly determined by the desired surface melting rate, without any flexibility. In the example, required bottom temperatures are then equal to 1410°C, leading to accelerated refractory corrosion and wear.

**Claims**

1.  Furnace for melting vitrifiable materials, comprising:

    (i) a melting tank M comprising :

      - at least an upstream zone Z1 covered by a crown C1 and equipped with electrical heating means;
      - a downstream zone Z2 covered by a crown C2 and equipped with combustion heating means;
      - a transition zone T between crown C1 and crown C2;

    (ii) a fining tank F covered by a crown C4 and equipped with combustion heating means;
    (iii) a neck N covered by a crown C3 and separating the melting tank M and the fining tank F;
    (iv) at least one inlet mean X located at the melting tank M, for charging it with vitrifiable materials to be heated;
    (v) at least one outlet mean O located downstream of fining tank F for the melted glass to flow to a working zone; and
    (vi) at least an extraction mean 4 of flue gas located at the at least one upstream zone Z1; **characterized in that** :

      - the height H1 of the crown C1 is defined by : $H1 \leq 0.75*H2$; H2 being the height of the crown C2;
      - the length L1 of the at least one upstream zone Z1 is defined by : $0.25*(L1+L2) \leq L1 \leq 0.8*(L1+L2)$; L2 being the length of the downstream zone Z2; and
      - the length LT of said transition zone T is defined by : $LT \leq 0.2*(L1+L2)$.

2.  Furnace according to claim 1, **characterized in that** the height H1 of the melting crown C1 is defined by : $H1 \leq 0.5*H2$.

3.  Furnace according to one of the preceding claims, **characterized in that** the length L1 of the at least one upstream zone Z1 is defined by : $L1 \leq 0.7*(L1+L2)$.

4.  Furnace according to one of the preceding claims, **characterized in that** the length L1 of the at least one upstream zone Z1 is defined by : $0.5*(L1+L2) \leq L1$.

5.  Furnace according to one of the preceding claims, **characterized in that** the length LT of said transition zone T is defined by : $LT \leq 0.15*(L1+L2)$.

6.  Furnace according to one of the preceding claims, **characterized in that** the downstream zone Z2 is equipped further with electrical heating means.

7.  Furnace according to one of the preceding claims, **characterized in that** it further comprises at least an extraction mean of flue gas in the downstream zone Z2.

8.  Furnace according to one of the preceding claims, **characterized in that** it further comprises at least an extraction mean of flue gas in the fining tank F.

9.  Furnace according to one of the preceding claims, **characterized in that** the furnace is defined by the following :

$$0.1*W_F \leq W_N \leq 0.7* W_F;$$

$$W_M \geq 1.4*W_N;$$

$W_M$ being the width of melting tank M;
$W_F$ being the width of fining tank F;
$W_N$ being the width of neck N.

**10.** Furnace according to the preceding claim, **characterized in that** it is defined by : $W_M \geq 1.5*W_N$.

**11.** Furnace according to one of the claims 9-10, **characterized in that** it is defined by : $0.2*W_F \leq W_N \leq 0.6*W_F$.

**12.** Furnace according to one of the preceding claims, for producing flat glass sheets.

**13.** Process for melting vitrifiable materials to produce flat glass, comprising the steps of :

   - providing a furnace according to one of claims 1 to 12;
   - charging the vitrifiable materials in said melting tank with said inlet mean;
   - melting the vitrifiable materials in said melting tank;
   - fining the obtained melt in said fining tank;
   - flowing the melt from the fining tank to a working zone trough the outlet mean;

   **characterized in that** the electrical input fraction of the furnace is in the range of from 30% to 85%, preferably of from 35 to 85%.

**14.** Process according to claim 13, **characterized in that** the vitrifiable materials comprise raw materials and cullet, the amount of cullet being at least 10% in weight of the total amount of vitrifiable materials, preferably at least 30% in weight of the total amount of vitrifiable materials.


**Patentansprüche**

**1.** Ofen zum Schmelzen von verglasbaren Materialien, umfassend:

   (i) einen Schmelztank M, umfassend:

   - mindestens eine stromaufwärtige Zone Z1, bedeckt mit einer Krone C1 und ausgestattet mit elektrischen Heizmitteln;
   - eine stromabwärtige Zone Z2, bedeckt mit einer Krone C2 und ausgestattet mit Verbrennungsheizmitteln,
   - eine Übergangszone T zwischen Krone C1 und Krone C2;

   (ii) einen Läutertank F, bedeckt mit einer Krone C4 und ausgestattet mit Verbrennungsheizmitteln;
   (iii) einen Hals N, bedeckt mit einer Krone C3, der den Schmelztank M und den Läutertank F trennt;
   (iv) mindestens ein am Schmelztank M angeordnetes Einlaufmittel X zum Beschicken mit zu erwärmenden verglasbaren Materialien;
   (v) mindestens ein Auslassmittel O, angeordnet stromabwärts von dem Läutertank F, damit das geschmolzene Glas zu einer Bearbeitungszone strömt; und
   (vi) mindestens ein Extraktionsmittel 4 für Rauchgas, das sich in der mindestens einen stromaufwärtigen Zone Z1 befindet; **dadurch gekennzeichnet, dass**:

   - die Höhe H1 der Krone C1 definiert ist durch: $H1 \leq 0,75 * H2$; wobei H2 die Höhe der Krone C2 ist;
   - die Länge L1 der mindestens einen stromaufwärtigen Zone Z1 definiert ist durch: $0,25 * (L1 + L2) \leq L1 \leq 0,8 * (L1 + L2)$; wobei L2 die Länge der stromabwärtigen Zone Z2 ist; und
   - die Länge LT der Übergangszone T definiert ist durch: $LT \leq 0,2 *(L1 +L2)$.

**2.** Ofen nach Anspruch 1, **dadurch gekennzeichnet, dass** die Höhe H1 der Schmelzkrone C1 definiert ist durch: $H1 \leq 0,5 * H2$.

**3.** Ofen nach einem der vorhergehenden Ansprüche, **dadurch gekennzeichnet, dass** die Länge L1 der mindestens einen stromaufwärtigen Zone Z1 definiert ist durch: $L1 \leq 0,7 * (L1 + L2)$.

**4.** Ofen nach einem der vorhergehenden Ansprüche, **dadurch gekennzeichnet, dass** die Länge L1 der mindestens einen stromaufwärtigen Zone Z1 definiert ist durch: $0,5 * (L1 + L2) \leq L1$.

**5.** Ofen nach einem der vorhergehenden Ansprüche, **dadurch gekennzeichnet, dass** die Länge LT der Übergangszone T definiert ist durch: $LT \leq 0,15 * (L1 + L2)$.

**6.** Ofen nach einem der vorhergehenden Ansprüche, **dadurch gekennzeichnet, dass** die stromabwärtige Zone Z2 ferner mit elektrischen Heizmitteln ausgestattet ist.

**7.** Ofen nach einem der vorhergehenden Ansprüche, **dadurch gekennzeichnet, dass** er ferner in der stromabwärtigen Zone Z2 mindestens ein Extraktionsmittel für Rauchgas umfasst.

**8.** Ofen nach einem der vorhergehenden Ansprüche, **dadurch gekennzeichnet, dass** er ferner in dem Läutertank F mindestens ein Extraktionsmittel für Rauchgas umfasst.

**9.** Ofen nach einem der vorhergehenden Ansprüche, **dadurch gekennzeichnet, dass** der Ofen definiert ist durch:

$$0,1 * W_F \leq W_N \leq 0,7 * W_F;$$

$$W_M \geq 1,4 * W_N;$$

wobei $W_M$ die Breite des Schmelztanks M ist;
wobei $W_F$ die Breite des Läutertanks F ist;
wobei $W_N$ die Breite des Halses N ist.

**10.** Ofen nach dem vorhergehenden Anspruch, **dadurch gekennzeichnet, dass** er definiert ist durch: $W_M \geq 1,5 * W_N$.

**11.** Ofen nach einem der Ansprüche 9-10, **dadurch gekennzeichnet, dass** er definiert ist durch: $0,2 * W_F \leq W_N \leq 0,6 * W_F$.

**12.** Ofen nach einem der vorhergehenden Ansprüche zum Herstellen von Flachglasscheiben.

**13.** Verfahren zum Schmelzen von verglasbaren Materialien zum Herstellen von Flachglas, umfassend die Schritte:

    - Bereitstellen eines Ofens nach einem der Ansprüche 1 bis 12;
    - Eintragen der verglasbaren Materialien in den Schmelztank mit dem Einlaufmittel;
    - Schmelzen der verglasbaren Materialien in dem Schmelztank;
    - Läutern der erhaltenen Schmelze in dem Läutertank;
    - Ausfließenlassen der Schmelze aus dem Läutertank in eine Bearbeitungszone durch das Auslassmittel;

    **dadurch gekennzeichnet, dass** der elektrische Eingangsanteil des Ofens im Bereich von 30 % bis 85 %, vorzugsweise von 35 % bis 85 % liegt.

**14.** Verfahren nach Anspruch 13, **dadurch gekennzeichnet, dass** die verglasbaren Materialien Rohmaterialien und Glasbruch umfassen, wobei die Menge an Glasbruch mindestens 10 Gew.-% der Gesamtmenge an verglasbaren Materialien, vorzugsweise mindestens 30 Gew.-% der Gesamtmenge an verglasbaren Materialien beträgt.

**Revendications**

**1.** Four de fusion de matériaux vitrifiables, comprenant :

(i) une cuve de fusion M comprenant :

- au moins une zone amont Z1 couverte d'une voûte C1 et équipée de moyens de chauffage électrique ;
- une zone aval Z2 couverte d'une voûte C2 et équipée de moyens de chauffage par combustion ;
- une zone de transition T entre la voûte C1 et la voûte C2 ;

(ii) une cuve d'affinage F couverte d'une voûte C4 et équipée de moyens de chauffage par combustion ;
(iii) un goulet N couvert d'une voûte C3 et séparant la cuve de fusion M et la cuve d'affinage F ;
(iv) au moins un moyen d'entrée X situé au niveau de la cuve de fusion M, pour le chargement de celle-ci en matériaux vitrifiables à chauffer ;
(v) au moins un moyen de sortie O situé en aval de la cuve d'affinage F pour l'écoulement du verre fondu jusqu'à une zone de travail ; et
(vi) au moins un moyen d'extraction de gaz de combustion 4 situé au niveau de l'au moins une zone amont Z1 ;
**caractérisé en ce que** :

- la hauteur H1 de la voûte C1 est définie par : $H1 \leq 0,75*H2$ ; H2 étant la hauteur de la voûte C2 ;
- la longueur L1 de l'au moins une zone amont Z1 est définie par : $0,25*(L1+L2) \leq L1 \leq 0,8*(L1+L2)$ ; L2 étant la longueur de la zone aval Z2 ; et
- la longueur LT de ladite zone de transition T est définie par : $LT \leq 0,2*(L1+L2)$.

2. Four selon la revendication 1, **caractérisé en ce que** la hauteur H1 de la voûte de fusion C1 est définie par : $H1 \leq 0,5*H2$.

3. Four selon une des revendications précédentes, **caractérisé en ce que** la longueur L1 de l'au moins une zone amont Z1 est définie par : $L1 \leq 0,7*(L1+L2)$.

4. Four selon une des revendications précédentes, **caractérisé en ce que** la longueur L1 de l'au moins une zone amont Z1 est définie par : $0,5*(L1+L2) \leq L1$.

5. Four selon une des revendications précédentes, **caractérisé en ce que** la longueur LT de ladite zone de transition T est définie par : $LT \leq 0,15*(L1+L2)$.

6. Four selon une des revendications précédentes, **caractérisé en ce que** la zone aval Z2 est également équipée de moyens de chauffage électrique.

7. Four selon une des revendications précédentes, **caractérisé en ce qu'**il comprend en outre au moins un moyen d'extraction de gaz de combustion dans la zone aval Z2.

8. Four selon une des revendications précédentes, **caractérisé en ce qu'**il comprend en outre au moins un moyen d'extraction de gaz de combustion dans la cuve d'affinage F.

9. Four selon une des revendications précédentes, **caractérisé en ce que** le four est défini de la manière suivante :

$$0,1*W_F \leq W_N \leq 0,7*W_F ;$$

$$W_M \geq 1,4*W_N ;$$

$W_M$ étant la largeur de la cuve de fusion M ;
$W_F$ étant la largeur de la cuve d'affinage F ;
$W_N$ étant la largeur du goulet N.

10. Four selon la revendication précédente, **caractérisé en ce qu'**il est défini par : $W_M \geq 1,5*W_N$.

11. Four selon une des revendications 9 et 10, **caractérisé en ce qu'**il est défini par : $0,2*W_F \leq W_N \leq 0,6*W_F$.

12. Four selon une des revendications précédentes, pour la production de feuilles de verre plat.

**13.** Procédé de fusion de matériaux vitrifiables pour la production de verre plat, comprenant les étapes suivantes :

- obtention d'un four selon une des revendications 1 à 12 ;
- chargement des matériaux vitrifiables dans ladite cuve de fusion avec ledit moyen d'entrée ;
- fusion des matériaux vitrifiables dans ladite cuve de fusion ;
- affinage de la masse fondue obtenue dans ladite cuve d'affinage ;
- écoulement de la masse fondue de la cuve d'affinage à une zone de travail par le biais du moyen de sortie ;
**caractérisé en ce que** la fraction électrique d'entrée du four est comprise entre 30 % et 85 %, de préférence entre 35 et 85 %.

**14.** Procédé selon la revendication 13, **caractérisé en ce que** les matériaux vitrifiables comprennent des matières premières et du calcin, la quantité de calcin représentant au moins 10 % en poids de la quantité totale de matériaux vitrifiables, de préférence au moins 30 % en poids de la quantité totale de matériaux vitrifiables.

FIG.1

FIG.2

FIG.3

glass melt

batch blanket

C1

C2

T

LT

FIG.4

FIG.5

FIG.6

FIG.7

EP 4 504 671 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020229559 A1
- US 5011402 A
- US 3399046 A